# EUROPEAN PATENT APPLICATION

(11) **EP 4 686 706 A1**
(43) Date of publication of application: **04.02.2026**
(21) Application number: 25192088.0
(22) Date of filing: 28.07.2025
(51) Int. Cl.: C02F 9/00, C02F 1/66, C02F 1/72, C02F 11/06, C02F 11/121

(54) **METHOD AND SYSTEM TO PRODUCE BIOLOGICAL MATERIAL FROM MUNICIPAL WASTEWATER TREATMENT**

(30) Priority: 30.07.2024 IT 202400017758
(71) Applicant: Agrosistemi S.r.l., 29122 Piacenza (PC) (IT)
(72) Inventor: CELLA, Fabio, 29122 Piacenza (IT)
(74) Representative: Raimondi, Margherita

(57) **Abstract**

Method for the production of a biological material (BSA3) obtained from the treatment of biological materials associated with the civil wastewater purification cycle, comprising the following steps:
A1) extraction of a biological starting material (BSA0) downstream of a thickener (6) of the civil wastewater treatment plant;
A) oxidative reaction of the starting material (BSA0), with the addition of ferric chloride (FeCl₃) and hydrogen peroxide (H₂O₂) with the generation of heat and formation of a biological material (BSA1) having a pH of between 4 and 5 and containing hydrolysed proteins and iron;
B) hydrolytic reaction of the biological material (BSA1) oxidised by means of the addition of calcium hydroxide (Ca(OH₂), with the formation of biological material (BSA2) with pH>11;
C) partial neutralisation of the alkaline biological material (BSA2) by means of the addition of sulphuric acid (H2SO₄₎ with generation of a second biological material (BSA3), having a pH of between 9 and 10 and containing hydrolysed proteins, calcium sulphate, iron ions;
D) dehydration of the neutralized biological material (BSA3) with separation of a part in the solid state ready for use and a post-dehydration liquid component;
D1) transfer of the liquid component to the inlet of the purifier for a new purification and treatment cycle.

## Description

The present invention relates to a method for the production of an organic material obtained from biological materials associated with the civil wastewater purification cycle and to a plant for implementing said method.

It is known in the technical sector of sanitary engineering that wastewater cannot be reintroduced into the environment as such, since the final destinations such as the soil, the sea, the rivers and lakes are unable to assimilate a quantity of polluting substances greater than their own self-purifying capacity.

For this reason, wastewater is subjected to a process for removal of the contaminants, which is commonly referred to as wastewater purification.

The purification treatment consists in a succession of several steps during which the undesirable substances are removed from the wastewater, resulting in a final liquid effluent having a quality such as to be compatible with the self-purifying capacity of the prechosen waste receiving body.

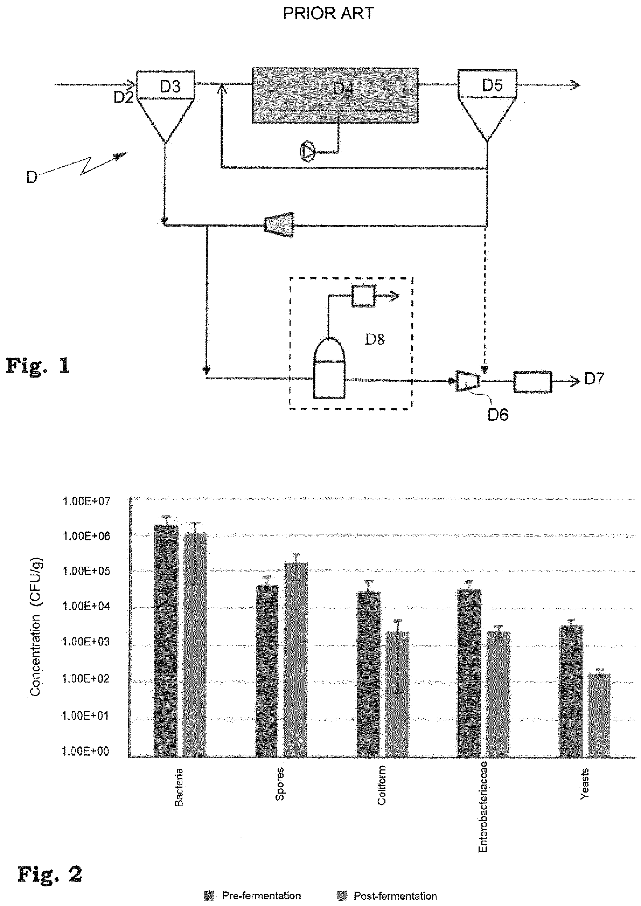

Wastewater of civil origin is collected by the individual sewage networks and conveyed by means of collectors to the purification plant D inside which it undergoes all the stages of the known purification process, as indicated in Fig.1; in detail:

### 1. Screening

The water is made to pass though grilles in order to retain waste matter such as leaves, plastic and other coarse material.

### 2. Sand and oil removal

During the sand removal stage the wastewater is made to pass through device which slows down its speed, thus allowing the heavier granular and sandy sediments to be deposited on the bottom.

### 3. Primary settling

Separation of the suspended solids from the wastewater by means of a decantation process.

### 4. Biological oxidation

Biological oxidation is the process in which aerobic microorganisms are used to decompose the organic matter present in the wastewater, using the available oxygen in order to metabolize the organic contaminants, transforming them into stable compounds such as carbon dioxide and water. This biological mass is commonly called "mixed liquor" or also "excess sludge".

### 5. Secondary settling

During this stage the mixed liquor flows over into the secondary settling tank inside which the live bacterial mass, which has purified the wastewater, being heavier than the water, settles on the bottom, becoming separated from the treated water which is then released into the environment.

### 6. Dehydration

Concentration of the decanted biological mass still with a high percentage of water so as to reduce it to a value on average of between 18 and 26%, namely where it has a solid, i.e. slurry-like, appearance, so that it may be conveyed away for recycling or disposal.

It is also known that the active sludge (C.A.S., Conventional Activated Sludge) purification plants are the most widely used and conventional wastewater treatment plants and the groups of microorganisms which characterize the purification biomass are the same for all civil wastewater purifiers worldwide. Said biological mass has typical special characteristics of purifying the civil wastewater, i.e. the water collected by the sewage system of cities which, by law, do not collect the waste discharged by large-scale industry or important trade activities.

US 6,368,511 discloses a method for treating the purification sludge by means of oxidative acid pre-conditioning and inorganic pre-conditioning aimed at maximizing the dehydration in order to favour the incineration of the purification sludge.

CN 110,054,395 discloses a method and a plant configured to treat the diluted sulphuric acid produced in a process for the production of sulphuric acid from coke, characterized in that this material is used as a reagent for the management of waste with high COD using the Fenton reaction.

Considering that nowadays the original organic substance of the soil is reduced significantly owing to intensive agricultural activity and that this reduction is one of the main reasons for the spread of desertification also in middle-latitude regions, the primary technical problem which is posed that of developing a method for treating said biomass in an aqueous suspension extracted from the sludge line before the conditioning and/or dehydration treatment (whether digested or undigested).

In the context of the technical problem it is also required that the method should be able to generate a biomass which is devoid of pathogenic bacteria and/or polluting organic substances (POPs), but rich in peptones and amino acids, which are nitrogenous substances able to easily provide the necessary nitrogen, in a form rapidly available for agricultural farming.

This, in order to create a precursor substance in the production of fertilizers which may be easily used and which is able to help restore effectively the original organic substance in the soil.

These results are obtained according to the present invention by a method according to the characteristic features of Claim 1 and by a plant according to the characteristic features of Claim 13.

The method for the production of a biological material BSA3 obtained from the treatment of biological materials associated with the civil wastewater purification cycle comprises the steps of:
- extraction of a biological starting material BSA0 downstream of a thickener 6 of the civil wastewater treatment plant;
- oxidative reaction of the starting material BSA0, with the addition of ferric chloride FeCl₃ and hydrogen peroxide H₂O₂ with the generation of heat and formation of a biological material BSA1 having a pH of between 4 and 5 and containing hydrolysed proteins and iron;
- hydrolytic reaction of the oxidised biological material BSA1, by means of the addition of calcium hydroxide Ca(OH)₂, with the formation of a biological material BSA2 having a pH>11 and containing hydrolysed proteins and iron ions;
- partial neutralization of the alkaline biological material BSA2 by means of the addition of sulphuric acid H₂SO₄ with generation of a second biological material BSA3, hydrolysed proteins, calcium sulphate, iron ions and pH of between 9 and 10;
- dehydration of the biological material BSA3 with separation of a part in the solid state ready for use and a post-dehydration liquid;
- transfer of the liquid component to the inlet of the purifier for a new purification and treatment cycle.

The starting biological material consists of a purification biomass associated with the wastewater purification cycle, either digested or undigested, extracted from the purification plant before the conditioning and/or dehydration treatments.

The oxidative reaction of the biomass is performed by adding ferric chloride and hydrogen peroxide, resulting in an exothermic reaction with raising of the temperature of the mixture to about 20°C higher than the ambient temperature and the formation of biological material with a pH of between 4 and 5.

Ferric oxide has a high capacity, provided by the Fe3+, to influence the reaction kinetics, slowing it down and minimizing the formation of foams, making management of the process easier.

The ferric chloride, in an aqueous solution of 40% w/w, is added in a percentage amount of between 1 and 7% w/w and preferably 4% w/w of the dry substance of the starting material.

The hydrogen peroxide in an aqueous solution with a concentration of 130 volumes is added in a percentage amount of between 5 and 15% w/w and preferably 7% w/w of the dry substance of the starting material.

The relative ratio FeCl₃/H₂O₂ of the masses of the two reagents is between 0.2 and 0.5.

The oxidative reaction time is between 30 and 60 minutes, and preferably between 40 and 50 minutes.

The hydrolytic reaction of the oxidised biomass is performed by means of the addition of calcium hydroxide to the biological material with a pH>11.

The quantity of calcium hydroxide is roughly 0.1 - 0.3 kg and preferably 0.2 kg for each kg of dry substance of starting biological material.

The duration of the hydraulic reaction between the oxidised material and calcium hydroxide for denaturation of the proteins is between 30 and 60 minutes, preferably between 40 and 50 minutes.

The partial neutralization is performed by means of the addition of sulphuric acid, with generation of a mixture of organic substance having a pH of between 9 and 10 and containing hydrolysed proteins, calcium sulphate and iron ions.

During this step the addition of sulphuric acid causes precipitation of calcium sulphate (CaSO4), a molecule characterizing the final substance (precursor for fertilizers) produced.

The sulphuric acid is added in an aqueous solution with a 50% concentration in an amount of between 0.1 - 0.3 kg and preferably 0.2 kg for each kg of dry substance of biological starting material.

The reaction time for partial neutralization of the hydrolysed material is between 15 and 30 seconds.

The liquid neutralized biological material is conveyed to a dehydration system (centrifuge, filter press, belt press), etc.), obtaining two separate parts comprising a percentage of dry substance on average of between 25% and 35% or between 35% and 45%, ready for use, which can be used as precursor in the production of fertilizers, and an aqueous part supplied again to the purifier for a new cycle.

The plant for the production of a biological material obtained from the treatment of biological materials associated with the civil wastewater purification cycle comprises a first reactor for the oxidative reaction of the biological starting material, output from the purification cycle and supplied thereto; a tank for storing ferric chloride; a tank for storing hydrogen peroxide; means of supplying the ferric chloride and the hydrogen peroxide to the first reactor; a second reactor for hydrolysis of the oxidised biological material output from the first reactor; a tank for storing calcium hydroxide; means for supplying the calcium hydroxide to the second reactor; a static mixer supplied with the hydrolysed material received from the second reactor, designed to perform partial neutralization of the hydrolysed biological material; a tank for storing sulphuric acid; means for supplying the sulphuric acid to the static mixer; means for dehydrating the partially neutralized biological material, designed to separate the same into two phases, i.e. a dry phase and an aqueous phase.

The dry residue comprises a percentage of dry substance of between 25% and 35% or between 35% and 45% comprising a hydrolysed organic substance, synthesized calcium sulphate and iron. Said dry substance is a precursor in fertilizer production.

Further details may be obtained from the following description of a non-limiting example of embodiment of the subject of the present invention provided with reference to the attached drawings in which:
Figure 1: shows a block diagram of the sequences of a civil wastewater treatment process according to the prior art;
Figure 2: shows a histogram of the microbial concentration of a biomass before and after anaerobic fermentation;
Figure 3: shows a block diagram illustrating the process sequences of the method according to the invention;
Figure 4:With reference to Figs. 3 and 4, a method according to the invention for the treatment of biological starting materials (BSAO), extracted from the sludge line of a purifier D before the conditioning and/or dehydration treatments (digested and undigested) will now be described with reference to an example of a plant in a preferred example of embodiment thereof.

Bearing in mind what was emphasized in the introduction regarding the fact that all civil wastewater is comparable in terms of chemical characteristics and, consequently, so are the biological masses used for its treatment, it was first necessary to characterize in detail the biomass in aqueous suspension (hereinafter referred to by the acronym BSA) to be treated, identifying exactly the microbial species which constitute it, in order to develop a treatment suitable for the demolition of any organic polluting substances, the hydrolysis of the proteins contained in them, and the sanitization of the biomass.

In detail:
microbiological characterization of two samples of purification sludge was carried out before and after anaerobic fermentation.

The first sample (before fermentation) is a light brown coloured sample collected from the aeration tank where the oxidative reaction takes place.

The second sample, grey coloured, is the same sample fermented anaerobically for 28 days in order to produce biogas. The samples were collected from the same purification plant.

Immediately after removal, the samples were placed on specific types of ground for microbial quantification. The portions were stored at -80°C for further extraction of the DNA and the metagenomic analyses.

Fig. 2 shows in summarised form the results of the quantification performed for the microbial concentration in the purifying biomass before and after anaerobic fermentation.

Having observed that, before and after anaerobic fermentation, the quantitative and qualitative differences are not significant to the point of having to define two specific sanitization and protein hydrolysis treatments for the BSA resulting from said two sources, it was considered plausible to test the method according to the invention for the treatment of both types of microbial biomasses without substantial modification in both cases.

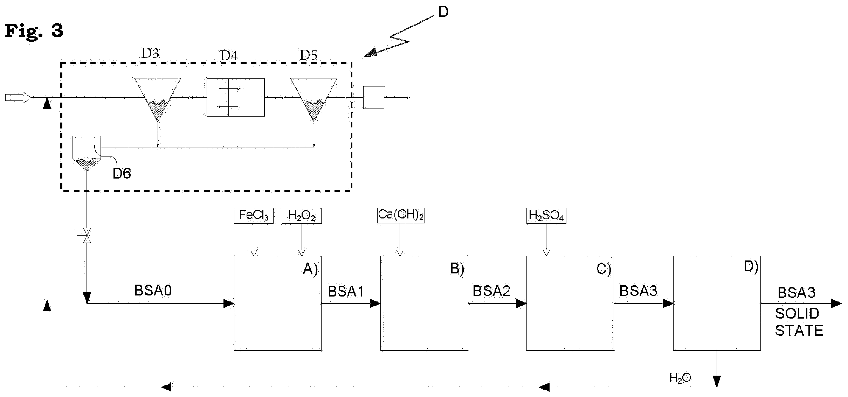

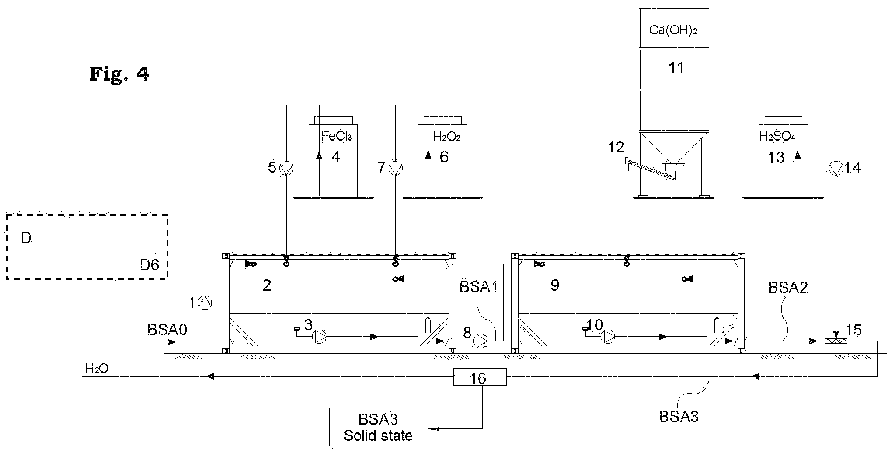

According to said preferred modes of implementation shown in Figs. 3 and 4, it is envisaged that the method comprises the following steps:

### STEP A) OXIDATIVE REACTION

The BSA is intercepted for the treatment directly along the supply line downstream of the thickeners 6 (Fig. 3) of the purifier D;
its concentration in dry substance is on average between 2 and 5%; this is equivalent to having 20 to 50 kg of suspended solids per cubic metre of BSA, which at the start of the treatment is defined BSA0.

By means of a Mohno pump (1) the BSA is introduced into a reactor (2).

A pump 3 of the submersible type, resistant to acid environments, is installed on the bottom of the reactor. The delivery of said pump conveys the reaction liquid to a higher level inside the reactor itself. This arrangement allows the liquid inside to be kept constantly stirred, allowing perfect mixing, without the need for propeller stirrers which are often unsuitable for liquids which are heavy or contain fibrous materials, typically present in this type of liquid.

The doses of reagents are introduced into the reactor.

The ferric chloride (FeCl₃) is pumped from the tank (4) via a magnetic-drive acid pump (5). The introduction of the ferric chloride lowers the pH of the mixture, preparing it for the subsequent reaction with the hydrogen peroxide.

Once introduction and mixing of the ferric chloride has been completed, the hydrogen peroxide (H₂O₂) is pumped via a magnetic-drive acid pump (7).

During this step an exothermic (Fenton) reaction takes places; this reaction, with the quantities of reagents introduced, raises the temperature of the BSA0 undergoing treatment by about 20°C with respect to the temperature of the incoming BSA0.

The Fenton reaction is a chemical reaction which involves hydrogen peroxide (H₂O₂) and iron ions (Fe²⁺ or Fe³⁺) in order to produce hydroxyl radicals (•OH) which are highly reactive.

Fe²⁺ + H²O² → Fe³⁺ + OH⁻ + OH

The reaction is used to degrade complex organic contaminants into simpler and less toxic substances.

The Fenton method is viewed as being a potentially convenient and low cost way of generating oxidising species able to treat a multiplicity of chemical waste, generating hydroxyl radicals which are among the strongest known oxidizing agents able to degrade a vast range of organic compounds.

Compared to other oxidizing agents, hydrogen peroxide is not very costly, is simple to manage and does not pose any lasting danger for the environment since it decomposes easily into water and oxygen. In the same way, iron is relatively cheap, is safe and is not toxic.

Many components, depending on both the type of waste which must be treated and on the type of catalyst and the other reagents used, may influence the speed and stoichiometry of the Fenton reaction. Therefore there does not exist a standard process which is effective for all types of pollutant which must be identified following experimental tests.

Since BSA0 is a heterogenous material mainly composed of organic substance, consisting of the bacteria species described above, it has been necessary, by means of a specific test, to identify the concentrations and quantities of reagents to be introduced, in order to optimize the process in relation to the dried substance of the BSA0.

The concentrations identified are:
- iron chloride (III) (40% w/w in aqueous solution);
- oxygenated water (130 volumes in aqueous solution).

The dosage of said reagents ranges between:
+ 1% - 7% w/w of the dry substance of the BSA0 for ferric chloride, preferably 4% w/w;
+ 5% - 15% w/w of the dry substance of the BSA0 for oxygenated water, preferably 7% w/w

Therefore, in step A), the preferred specific conditions for treatment of the BSA0 are:
a) Concentration of FeCl₃ = 4% w/w of the dry substance of the BSA0
b) Concentration of H₂O₂ = 7% w/w of the dry substance of the BSA0
c) FeCl₃ / H₂O₂ ratio = 2.8 - 3
d) pH = 4 - 5
e) Temperature = 30 - 40°C
f) Duration of the reaction = 45 - 60 minutes

The reaction promoted by the two reagents facilitates the disintegration of the organic substance and favours the subsequent alkaline hydrolysis which occurs in the following step B).

The BSA output from the reactor (2) is defined BSA1.

### STEP B) HYDROLYTIC REACTION

The BSA1 is removed from the reactor (2) by means of an acid-resistant Mohno pump (8) actuated by a level sensor present in the reactor (1) and introduced into the reactor (9).

Said reactor is identical to the reactor (2), so that the description is the same as that already given in Step A).

A predefined dose of calcium hydroxide - Ca(OH)₂ - is introduced from the silo (11) into the reactor by means of a screw feeder (12). The dose introduced neutralizes the pH of the BSA1 and raises it up to a pH>11.

Step B) introduces a chemical reaction of alkaline hydrolysis of the protein phase, still present, in this biomass. The proteins are complex chains of amino acids which per se cannot be used by plants, but, after the hydrolysis treatment, following their breakdown into carbon dioxide and amino acids, which are their basic constituents, they become available for radical absorption of the crops and nutritionally are very useful.

The BSA has a very fine particle size and, therefore, chemically, may have very rapid reaction times.

The term "hydrolysis" refers to the organic part present in the BSA.

The organic part undergoes hydrolysis following chemical type reactions and reduces down to an inorganic substance. The inorganic substance, produced following these processes, is stable, does not undergo further change and is inert to the existing physical/chemical/biological conditions where it is present.

A first hydrolysis step already took place in Step A) by means of the Fenton reaction and therefore the original organic substance was already partially broken down into less complex soluble compounds, such as carbohydrates, fats, proteins, peptides (portions of proteins) and free amino acids (basic element of proteins), etc.

By means of a specific test the quantity of pure calcium hydroxide - Ca(OH)₂ - in the form of aerated powder, to be introduced in relation to the dry substance of the BSAO, was identified in order to optimize the process.

The dosage of said reagent ranges between:
+ 10% - 30% w/w of the dry substance of the BSAO, preferably 20% w/w.

Therefore, in Step B), the preferred specific conditions for treatment of the BSA0 are:
a) Concentration of Ca(OH)₂ in the mixture = 20% w/w of the dry substance of the BSA0
b) pH≥11
c) Temperature = 30 - 40°C (resulting from Step A)
d) Duration of the reaction = 30 - 60 minutes

At the end of the treatment the hydrolysed and alkaline BSA1, called BSA2, is transferred to the following Step C)

### STEP C) PARTIAL NEUTRALIZATION

The BSA2 is drawn off from the reactor (9) by means of the pump of the decanter 16 or other dehydration system present on the purifier D, but it is activated to perform pumping by a level sensor present in the reactor (9).

During transit inside the pipe which connects it to the dehydration system, the BSA2 passes through a static mixer (15) consisting of a series of breakwaters installed inside the pipe itself.

Said mixer is made of AISI 316 or superior grade stainless steel, lined with antiacid material (resin, nylon, Teflon, etc.) able to prevent the corrosion effect of sulphuric acid.

In fact, the aim of Step C) is to neutralize partially the pH of the BSA2 by means of sulphuric acid.

A magnetic-drive resin pump (14) supplies the mixer 15 with the sulphuric acid (H₂SO₄) having a concentration of 50% and present in a tank (13) arranged upstream of the static mixer (15) itself.

The dosage of said reagent ranges between:
+ 10% - 30% w/w of the dry substance of the BSAO, preferably 20% w/w.

Therefore, in step C), the preferred specific conditions for treatment of the BSA2 are:
a) Concentration of H₂SO₄ (SOL.AL 50%)= 20% w/w of the dry substance of the BSA0
b) Final pH = 9 - 10
c) Temperature = 30 - 40°C (resulting from Step B)
d) Duration of the reaction = 15 - 30 seconds

At the end of the treatment the BSA, hydrolysed and partially neutralized, is conveyed to the following Step D) and referred to as BSA3.

### STEP D) DEHYDRATION

During this step the liquid biological material BSA3 is conveyed to a dehydration system by means of machines such as a centrifuge, filter press, belt press, which are usually already present in civil wastewater purification plants.

The liquid biological material BSA3, neutralized by means of H₂SO₄ in the preceding Step C) contains the protein demolition products resulting from denaturation of the proteins produced by the reactions occurring in the preceding Steps A) and B). Moreover, should polluting organic substances of industrial origin be present in the BSAO, they would be demolished or reduced during the reactions occurring in Step A).

The dehydration separates the biological material BSA3 into two separate parts: a solid part and a liquid part. The solid part, which has a percentage of dry substance on average of between 25% and 35% (dehydration with centrifuge or belt press) and between 35% and 45% (dehydration with filter press) contains mainly hydrolysed organic substances, synthesized calcium sulphate from the neutralization reaction according to the preceding Step C) and a significant amount of iron, used as catalyst in the oxidative reaction of Step A).

The dehydrated BSA3 is discharged from the purification cycle and is a raw material which may be used as a component for the production of fertilizers, or dried and used for other applications, for example as a combustion energy integrator in the cement industry.

The liquid part is recirculated to the start of the purification plant for a new purification cycle.

It is therefore clear how the method according to the present invention is able to provide a solution to numerous problems arising from the need to recondition biological materials associated with the civil wastewater purification cycle, resulting in:
-) an organic material which is
   • partially mineralized;
   • sanitized;
   • has hydrolysed proteins;
   • has reduced concentrations of organic contaminants;
   • has mineral elements able to counteract the salinity in the soil and correct the pH
   being able to act as a fertilizer precursor;
-) generation of biological materials, without pathogenic bacteria, with no or a limited presence of polluting organic substances of anthropic origin;
-) a material which is rich in hydrolysed organic substance and which has a large amount of peptones and amino acids, which are nitrated substances able to provide easily and in a rapidly available manner the nitrogen necessary for agricultural crops;
-) a raw material consisting of an organic substance which is safe from a sanitary point of view and widely available, able to exert a significant action preventing desertification and the gradual salinization and alkalinization of agricultural soils.

In fact, calcium sulphate is very effective both in "saline" soils, which are rich in sodium, and in "non-saline alkaline" soils, which are also rich in sodium and/or potassium; in these situations in fact the gypsum favours rebalancing of the cationic exchange capacity (c.e.c.), causing displacement of the monovalent, alkaline metal ions (sodium and magnesium) from the colloidal particles in the ground, thus favouring bivalent alkaline ions (calcium and magnesium).

The gypsum directly provides calcium, which is needed by plants for reinforcement of the cell walls, making them more resistant to disease and frost, and sulphur is also fundamental for the activity of the useful bacterial flora in the ground.

A further advantage of the method according to the invention is that the substances used for the chemical reactions which are performed during treatment form part of the final product, being useful for agriculture and in particular for preventing desertification.

A further advantage is the possibility of being able to apply the method within a plant for the biological purification of civil wastewater using some of the apparatus of the purifier itself in order to perform some of the steps, such as the thickener and the dehydration system.

Although described in connection with a number of embodiments and a number of preferred examples of implementation of the invention, it is understood that the scope of protection of the present patent is determined solely by the claims below.

## Claims

1. Method for the production of a biological material (BSA3) obtained from the treatment of biological materials associated with the civil wastewater purification cycle, **characterized in that** it comprises the following steps:
A1) extraction of a biological starting material (BSA0) downstream of a thickener (6) of the civil wastewater treatment plant;
A) oxidative reaction of the starting material (BSAO), with the addition of ferric chloride (FeCl₃) and hydrogen peroxide (H₂O₂) with heat generation and formation of a biological material (BSA1) having a pH of between 4 and 5 and containing hydrolysed proteins and iron;
B) hydrolytic reaction of the oxidised biological material (BSA1) by means of the addition of calcium hydroxide (Ca(OH₂), with the formation of biological material (BSA2) having a pH>11;
C) partial neutralisation of the alkaline biological material (BSA2) by means of the addition of sulphuric acid (H₂SO₄) with generation of a second biological material (BSA3) having a pH of between 9 and 10 and containing hydrolysed proteins, calcium sulphate, iron ions;
D) dehydration of the biological material (BSA3) with separation of a part in the solid state ready for use and a post-dehydration liquid component;
D1) transfer of the liquid component to the inlet of the purifier for a new purification and treatment cycle.

2. Method according to Claim 1, **characterized in that** the biological starting material (BSA0) consists of a purification biomass associated with the wastewater purification cycle, either digested or undigested, extracted from the purification plant before the conditioning and/or dehydration treatments.

3. Method according to either one of Claims 1 or 2, **characterized in that** said oxidative reaction of the biomass (BSA0) is performed by adding ferric chloride (FeCl₃) and hydrogen peroxide (H₂O₂)), resulting in an exothermic reaction with raising of the temperature of the mixture to about 20°C higher than the ambient temperature and formation of a biological material (BSA1) with a pH of between 4 and 5.

4. Method according to the preceding claim, **characterized in that** the quantities of ferric chloride (FeCl₃) and hydrogen peroxide (H₂O₂) are introduced:
-) for ferric chloride with a concentration of 40% w/w in aqueous solution in a percentage amount of between 1 and 5% w/w and preferably 4% w/w of the dry substance (BSAO);
-) for hydrogen peroxide (aqueous solution with a concentration of 130 Volumes), in a percentage amount of between 5 and 15% w/w and preferably 7% w/w of the dry substance (BSA0) ;
-) and with a relative ratio (FeCl₃/H₂O₂) of the masses of the two reagents ranging between 0.2 and 0.5.

5. Method according to any one of the preceding claims, **characterized in that** the oxidative reaction time is between 30 and 60 minutes and is preferably between 40 and 50 minutes.

6. Method according to any one of the preceding claims, **characterized in that** the hydrolytic reaction of the biomass (BSA1) is performed by adding calcium hydroxide (Ca(OH)₂) to the biological material (BSA2) with a pH>11 containing hydrolysed proteins and iron ions.

7. Method according to the preceding claim, **characterized in that** the quantity of calcium hydroxide is about 0.1 - 0.3 kg of calcium hydroxide per kg of dry substance of biological starting material (BSA0) and preferably 0.2 kg of calcium hydroxide per kg of dry substance of biological starting material (BSA0).

8. Method according to any one of the preceding claims, **characterized in that** the duration of the hydrolytic reaction between the oxidised material (BSA1) and calcium hydroxide (Ca(OH)₂) for denaturation of the proteins is between 30 and 60 minutes, and preferably between 40 and 50 minutes.

9. Method according to any one of the preceding claims, **characterized in that** the partial neutralization is performed by means of:
-) the addition of sulphuric acid H₂SO₄ with generation of a mixture of organic substance (BSA3) having a pH of between 9 and 10 and containing hydrolysed proteins, calcium sulphate and iron ions.

10. Method according to the preceding claim, **characterized in that** said partial neutralization reaction is performed by introducing sulphuric acid in an amount of between 0.1 and 0.3 kg and preferably 0.2 kg of sulphuric acid with a concentration of 50%, per kg of dry substance of biological starting material (BSA0).

11. Method according to either one of Claims 9 or 10, **characterized in that** the reaction time for partial neutralization of the hydrolysed material (BSA2) is between 15 and 30 seconds.

12. Method according to any one of the preceding claims, **characterized in that** the liquid biological material (BSA2) is conveyed to a dehydration system, obtaining two separate parts:
-) a solid part, comprising a percentage of dry substance on average of between 25% and 35% or between 35% and 45% which can be used as precursor for the production of fertilizers;
- an aqueous part again supplied to the purifier for a new purification and treatment cycle.

13. Plant for the production of a biological material (BSA3) obtained from the plants for the treatment of biological materials associated with the civil wastewater purification cycle, comprising at least:
- means (D2) for removing the sand and oil from the incoming sludge; and in sequence from upstream to downstream: primary settling means (D3); biological oxidation means (D4); secondary settling means (D5) and dehydration means (D6),
the plant being **characterized in that** it comprises:
- a first reactor (2) supplied at the input with the material (BSA0) output from the dehydration means (D6), and configured for the oxidative reaction of the initial biological starting material (BSAO);
- a tank (4) for storing ferric chloride ((FeCl₃);
- a tank (4) for storing hydrogen peroxide (H₂O₂);
- means (5;7) for supplying the ferric chloride (FeCl₃) and hydrogen peroxide (H₂O₂) to the first reactor (2);
- a second reactor (9) supplied at the input with the material (BSA1) output from the first reactor (2) and configured for hydrolysis of the oxidised biological material (BSA1);
- a tank (11) for storing calcium hydroxide (Ca(OH)₂);
- means (12) for supplying the calcium hydroxide to the second reactor (9);
- a static mixer (15) supplied with the hydrolysed material (BSA2) received from the second reactor (9) and configured for the partial neutralization of the hydrolysed biological material (BSA2);
- a tank for storing sulphuric acid (H₂SO₄);
- means (14) for supplying the sulphuric acid to the static mixer (15);
- means (16) for dehydrating the partially neutralized biological material (BSA3), supplied by the static mixer, configured to separate the same into two phases, i.e. a dry phase (BSA3) and aqueous phase (H2O).

14. Plant according to Claim 13, **characterized in that** the dry phase (BSA3) comprises a percentage of dry substance of between 25% and 35% or between 35% and 45% and comprising a hydrolysed organic substance, synthesized calcium sulphate and iron.

15. Plant according to Claim 13 or 14, **characterized in that** said dry substance (BSA3) is a precursor in fertilizer production.

16. Plant according to the preceding claims, **characterized in that** said means (5;7) for supplying the ferric chloride (FeCl₃) and sulphuric acid (H₂O₂) to the first reactor comprise a magnetic drive pump.

17. Plant according to the preceding claims, **characterized in that** said means (12) for supplying the calcium hydroxide to the second reactor (9) comprise a screw feeder.
